# EUROPEAN PATENT APPLICATION

(11) **EP 2 399 871 A2**
(43) Date of publication of application: **28.12.2011**
(21) Application number: 11167895.9
(22) Date of filing: 27.05.2011
(51) Int. Cl.: C02F 1/32, C02F 1/72, C02F 101/38

(54) **Reactor and plant for abating nitrogen present in livestock and industrial effluents**

(30) Priority: 27.05.2010 IT MI20100951
(71) Applicant: Promozione & Sviluppo S.R.L., 46037 Roncofferraro (IT)
(72) Inventor: LEONARDI, Giuliano, 26031 ISOLA DOVARESE (IT)
(74) Representative: Gervasi, Gemma

(57) **Abstract**

A reactor is described for the photocatalysis of industrial and livestock effluents which has proved to be surprisingly and advantageously effective for removing nitrogen simultaneously and contemporaneously from both organic and inorganic compounds, hence significantly reducing the relative emissions into the environment.

## Description

### FIELD OF THE INVENTION

The present invention relates to a reactor wherein the photocatalytic oxidation of both inorganic and organic nitrogen in industrial and livestock effluents to elemental nitrogen takes place, and a plant comprising said reactor.

In particular, the reactor comprises the combination of a suitable catalyst and suitable structural measures in order to optimize the photocatalytic oxidation in terms of economic viability and yield over time.

### STATE OF THE ART

In order to meet the growing demand for meat, in recent decades there has been a remarkable growth in animal farming, particularly of cattle, pigs and poultry.

The increase in yields per hectare of forage and the possibility to use concentrated feed available on the market have led to a high degree of specialization of farms, with a large increase in the number of animals raised per hectare.

At the same time, the ever increasing dependence of agriculture on its associated industries has also led to considerable specialization at the regional level; farming has tended to develop in particular areas, linked to the production of feed, processing of animal products, and services related to livestock health.

Animal production has virtually undergone a separation from agricultural production and has assumed characteristics similar to industrial production, including the problem of waste disposal.

The rising cost of labour has also led to the development of automation in farm sheds, with a consequent reduction in manure production in favour of sewage, which is a liquid product hence more difficult to dispose of.

In intensively farmed areas, contamination from animal faecal waste often occurs, particularly due to the excessive quantity and the inappropriate choice of time and period of distribution.

The danger of surface water contamination by livestock effluent is linked in particular to the phenomena of run-off and soil erosion, with organic substances, phosphorus based compounds, nitrogen based compounds (nitrates and ammoniacal nitrogen) and pathogenic microorganisms being carried into the water bodies.

In contrast, the danger of groundwater contamination derives mainly from nitrates which form by oxidation of ammoniacal nitrogen and of that contained in organic matter.

The factors which primarily affect water contamination by faecal waste from animals are the quantity and quality of distributed liquid sewage or manure, the nature of the soil and its stratigraphy, the period and mode of application, irrigation and other chemical fertilizers, and arrangement of crops.

Particularly contaminating is pig faecal waste which, compared to that of ruminants, has a higher content of readily available nitrogen and can contain high concentrations of heavy metals, such as copper, normally used as feed supplements.

Hence organic substances, phosphorus, nitrogen, pathogenic microorganisms and heavy metals are also spread into the environment with livestock effluent.

With particular reference to nitrogen, this varies in relation to:
- type and category of farmed animal;
- level of N in the diet.

It is estimated that 50-80% of the N ingested through the diet (supplements included) is then excreted:
- in the faeces as organic N (metabolic faecal, endogenous and microbial, and dietary) and
- in the urine, mainly as urea.

Therefore, given the issues relating to the recent development of intensive farms associated with, as stated, problems of land and air contamination, there is a strongly felt need for solutions which will allow adequate farming yields while reducing the environmental impact as far as possible.

This need is also confirmed by Directive 91/676/EEC, known as the "Nitrates directive" and implemented in Italy in 2006 (DLgs 152/2006), for protecting water resources, which identifies nitrogen substances from agricultural sources as among the causes of contamination from widespread sources. The Directive promotes the rational use of nitrogen compounds in agriculture to prevent their accumulation in the ground. The regulations state that the distributed fertilizers should not exceed the needs of the crops, whether in terms of synthetic fertilizers or in the use of organic matrices, such as livestock effluents, which are excluded from the regulatory constraints on refuse.

Consequently the object of the present invention is to solve the problem of high emissions of nitrogen compounds from farms, in the form of livestock effluents.

### SUMMARY OF THE INVENTION

The above object has been achieved by a reactor as indicated in claim 1 for the photocatalytic oxidation of both organic and inorganic nitrogen in industrial and livestock effluents, said reactor comprising a structure comprising:
- at least one first support layer;
- at least one second catalyst layer based on titanium, vanadium, zirconium, tin or a mixture thereof on said first support layer;
- at least one third flow layer for the flow of said effluents, said reactor being provided with an inlet (IN) and an outlet (OUT) for said effluents from said third flow layer;
- at least one fourth layer of vitreous or polymeric material having at least 90% transmittance to radiation in the UV-visible spectrum,
wherein said at least one third flow layer extends between said at least one second catalyst layer and said at least one fourth layer of vitreous or polymeric material.

The present invention also relates to a plant for abating both organic and inorganic nitrogen comprising said reactor, as indicated in claim 11.

The present invention also relates to a method for implementing said plant.

For the purposes of the present invention, with the phrase "industrial and livestock effluents" it is meant effluents originating from farms, biogas plants, industrial plants or civil purification plants, wherein inorganic and/or organic nitrogen are present.

With the phrase "inorganic and/or organic nitrogen" it is meant nitrogen in all those compounds, either inorganic or organic, which are present in said effluents and/or are released by them.

### BRIEF DESCRIPTION OF THE FIGURES

The characteristics and advantages of the present invention will be evident from the following detailed description and from the working examples given for illustrating and non-limiting purposes, and by the annexed Figures, wherein:
Figure 1 is a first view of a first embodiment of a reactor according to the present invention,
Figure 2 is a view of the structure of the reactor of Figure 1,

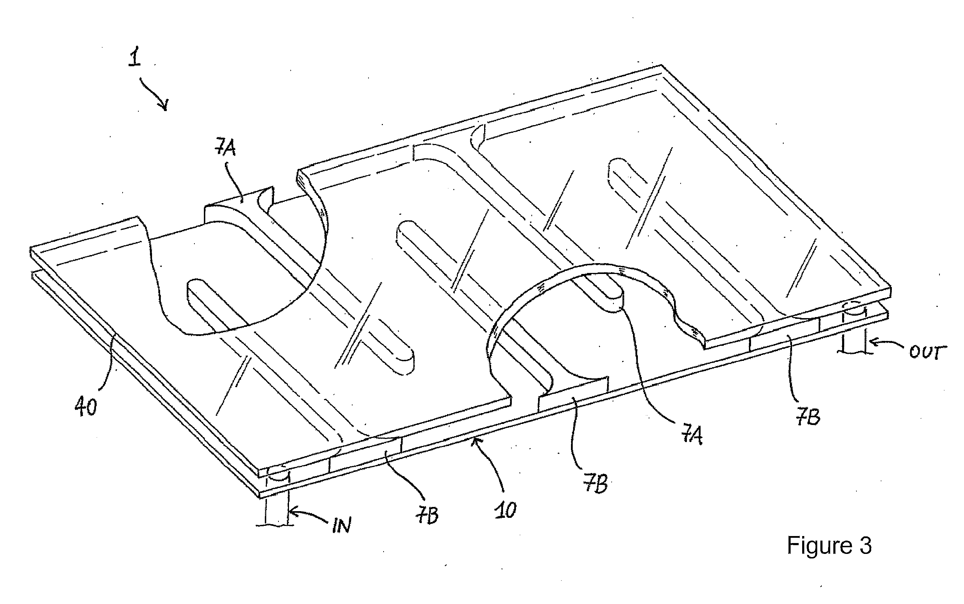

Figure 3 is a second view of the reactor of Figure 1,
Figure 4 is a view of a second embodiment of a reactor according to the present invention,
Figure 5 is a schematic view of the operation of the reactor of Figure 4,
Figure 5A is a detailed view of the structure of the reactor of Figure 4,
Figure 6 is a schematic view of a plant for abating both organic and inorganic nitrogen comprising a reactor in accordance with the present invention,
Figure 7 shows the variation of nitrogen removal over the time for standard ammonium chloride solutions obtained in accordance with Example 1 of the present invention, and
Figure 8 shows the variation of nitrogen removal over the time for liquid sewage originating from pig farms, obtained in accordance with Example 2 of the present invention.

### DETAILED DESCRIPTION OF THE INVENTION

The invention hence relates to a reactor 1 for reducing the presence of nitrogenated contaminants by the photocatalytic oxidation of both organic and inorganic nitrogen in industrial and livestock effluents, said reactor 1 comprising a structure 2 comprising:
- at least one first support layer 10;
- at least one second catalyst layer 20 based on titanium, vanadium, zirconium, tin or a mixture thereof on said first support layer 10;
- at least one third flow layer 30 for the flow of said effluents, said reactor 1 being provided with an inlet (IN) and an outlet (OUT) for said effluents from said third flow layer 30;
- at least one fourth layer 40 of vitreous or polymeric material having at least 90% transmittance to radiation in the UV-visible spectrum,
wherein said at least one third flow layer 30 extends between said at least one second catalyst layer 20 and said at least one fourth layer 40 of vitreous or polymeric material.

It has in fact been surprisingly observed that said reactor 1 enables simultaneous and contemporaneous removal of nitrogen present both in inorganic and in organic compounds, in effluents containing them. This surprising result enables said reactor to be used for various applications, such as the treatment of effluents originating from farms, the treatment of effluents originating from industries and the making water potable.

The reactor 1 comprises a first support layer 10 on which a catalyst layer is present based on titanium, vanadium, zirconium, tin or a mixture thereof, hereinafter also indicated by the phrase "second catalyst layer 20". The structure 2 also comprises a third layer 30 which extends between the second catalyst layer 20 and a fourth layer 40 of vitreous or polymeric material having at least 90% transmittance to radiation in the UV-visible spectrum. The third layer 30 is intended for the flowing of the organic liquid and for this reason is also indicated hereinafter by the phrase "third flow layer 30".

Preferably said third flow layer 30 has a thickness of 1-20 mm, more preferably a thickness of 2-10 mm, and even more preferably a thickness of 3-6 mm. In this respect, it has been observed that the more the effluent to be treated is darker or dense, the lesser the thickness of the third layer 30 should be to prevent any undesired dimming of the visible UV radiations by the effluent itself.

With specific reference to Figures from 1 to 3, which show a first preferred embodiment, the structure 2 of the reactor 1 presents a "panel" configuration, this indicating a substantially bidimensional configuration of preferably rectangular or square base. This base is formed by a first plate of supporting metal material 10. This metal material is preferably titanium. The second layer 20 of catalyst material is present on the first support layer 10.

The first support layer 10 and the second layer 20 of catalyst material comprise a first and a second opening defining respectively the inlet IN and the outlet OUT for the organic liquid into the third flow layer 30. As further specified hereinafter, the effluents to be treated in the reactor 1 reach the inlet IN through a hydraulic line by the action of pumping means. A hydraulic discharge line is instead connected to the outlet OUT to enable, for example, the treated organic liquid to be collected. The fourth layer 40 of vitreous or polymeric material comprises a plate of rectangular or square shape similar to that of the metal material plates which defines the first support layer 10. Between the catalyst layer (second layer 20) and the vitreous layer (fourth layer 40) a first perimetral seal gasket is located to prevent liquid escape, together with a second perimetral gasket to facilitate contact and ensure a constant liquid thickness between the vitreous plate and the catalyst layer.

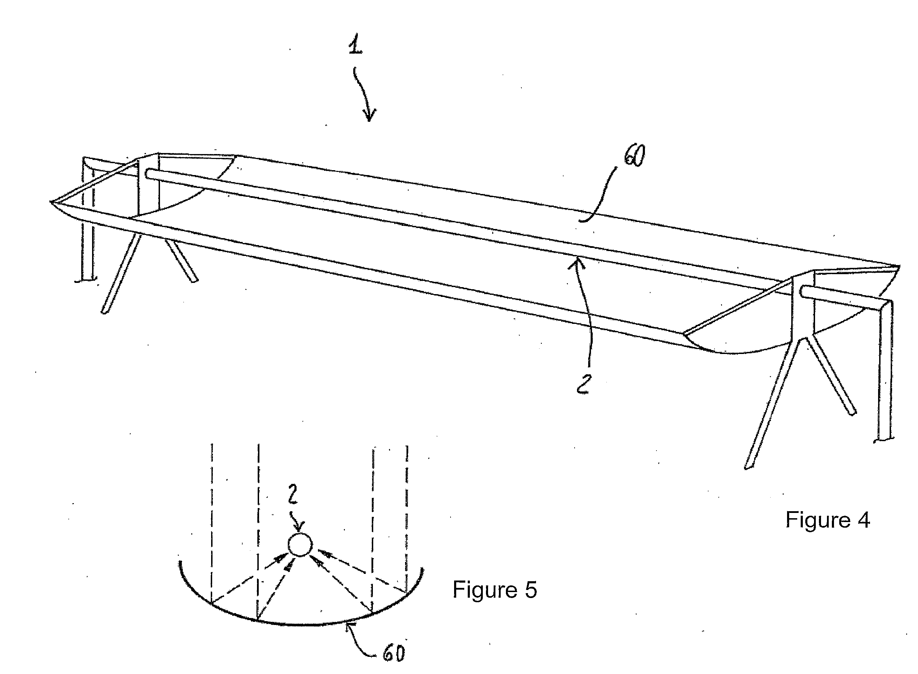

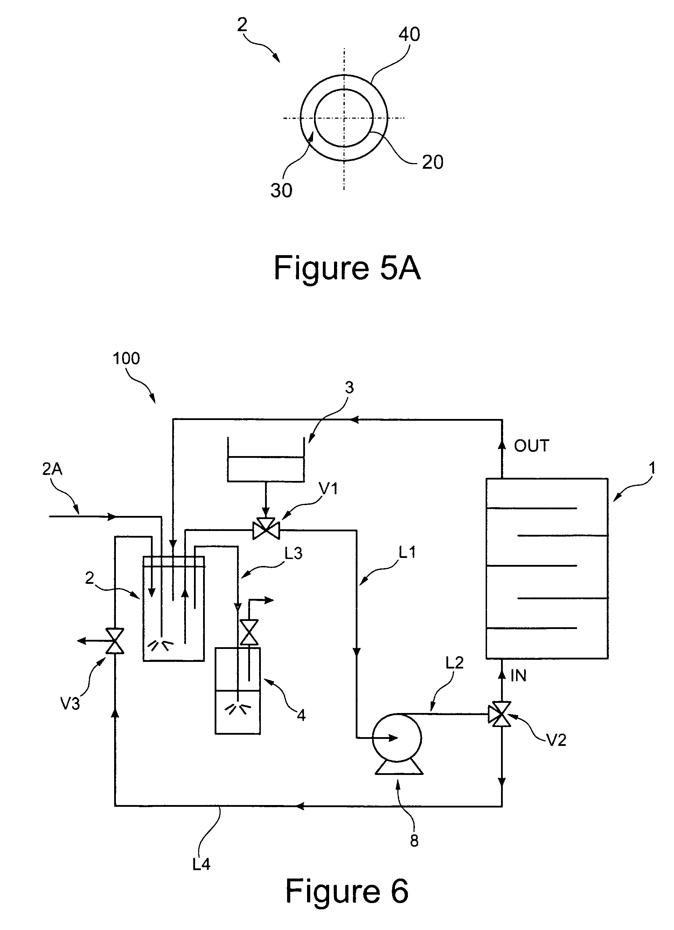

The reactor 1 comprises a perimetral closure frame (not shown in the Figures) for the purpose of maintaining the layers in their correct operative position. The perimetral frame preferably comprises a lower perimetral portion and an upper perimetral portion which are connected together by fixing means, for example of screw type. The two perimetral portions of the support frame are preferably defined by stainless steel profiles of square cross-section, whereas the connection between them is made by removable fixing means, for example of screw type. Figure 4 shows a second preferred embodiment of the reactor 1 according to the present invention, the structure 2 of which presents a layered cylindrical configuration illustrated in detail in Figure 5A. In particular, the first support layer 10 is formed from a cylindrical bar of metal material, on the surface of which the second catalyst layer 20 is present. This layered cylindrical structure 2 comprises a third layer 30 which extends between the second catalyst layer 20 and a fourth cylindrical layer 40 of vitreous material having at least 90% transmittance to radiation in the UV-visible spectrum.

Again with reference to Figure 4, according to a further embodiment, the reactor 1 also comprises a device for concentrating solar radiation onto the layered cylindrical structure 2. In particular, this device comprises at least one mirror 60 shaped as a parabola branch and orientated with respect to the structure 2 so as to reflect solar radiation thereon as shown schematically in Figure 5. It can be seen that the layered cylindrical structure 2 is positioned at the focal point of the parabola configured by the mirror 60 so as to concentrate the radiation peak onto the second catalyst layer 20.

The use of a layered cylindrical structure 2 for the reactor 1 is particularly advantageous whenever there is a need to obtain very extensive oxidation, such as in the case of making water potable, or more generally where the effluent to be treated is refractory to oxidation. The possible use of a high efficiency catalyst renders the layered cylindrical structure 2 particularly advantageous in terms of overall size relative to the aforedescribed "panel" structure. Moreover, the layered cylindrical structure 2 is also preferred if the effluent to be treated has high viscosity or greater difficulty in circulating through the flow layer 30.

Preferably, in the reactor 1 of the invention, said catalyst based on titanium, vanadium, zirconium, tin or a mixture thereof is titanium dioxide, vanadium pentoxide, zirconium dioxide, tin dioxide or a mixture thereof, preferably doped with Cr, Mn, Fe, Co, Ni, Cu, Mo, Ru, Rh, Pd, Ag, W, Re, Os, lr, Pt, Au or a mixture thereof, preferably with Cr, Mn, Fe, Co, Ni, Cu or a mixture thereof. It has been observed that said doping enables widening of the UV-visible radiation spectrum to be used in activating the photocatalytic process.

Preferably, this catalyst is in the form of nanoparticles of particle size of 1 to 200 nm, it having been observed that the large surface area offered by nanoparticles enables the photocatalytic efficiency of the reactor to be increased.

When this catalyst is titanium dioxide, it is preferably an anatase:rutile mixture in a ratio of 5:1 to 2:1, more preferably an anatase:rutile mixture in a 3:1 ratio. It has in fact been observed that anatase has a greater photocatalytic activity for the purposes of the present invention.

With regard to the vitreous or polymeric material having at least 90% transmittance to radiation in the UV-visible spectrum, this is chosen from quartz glass, polyethylene, or polypropylene.

Said material is preferably quartz glass, more preferably comprising SiO₂, Na₂O, K₂O, CaO, Fe₂O₃ and Sb₂O₃, as it has been noted that this advantageously presents total chemical inertness towards effluents and an extremely high transmittance, it therefore being particularly suitable for the purposes of the present invention.

According to a preferred embodiment, said catalyst layer is prepared by applying to the support layer an acid solution comprising titanium dioxide, vanadium pentoxide, zirconium dioxide, tin dioxide or a mixture thereof, having a particle size between 1 and 200 nm, a silicone alkoxide, C₁-C₄ alcohol and water, allowing the solvent to evaporate, and thermally treating to at least 100°C. In this manner, a layer is obtained which is particularly uniform in terms both of thickness and of particle size distribution.

Preferably, the reactor 1 of the invention further comprises partition elements located between the second layer of catalyst material and the fourth layer of glass quartz. These elements define a predetermined flow path for the effluent to be treated within the third flow layer. Defining the suitable arrangement for the elements enables the effluent exposure time to solar radiation to be maximized, i.e. enables the photocatalysis reaction to be optimized.

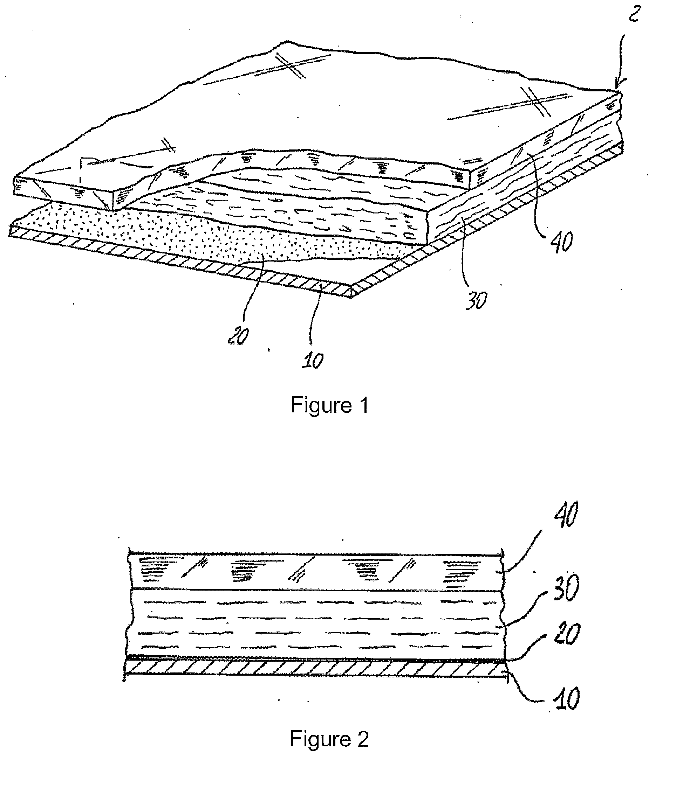

In the embodiment shown in Figure 1, a first series 7A and a second series 7B of partition elements extend from opposite sides of the structure of the reactor 1 in a direction substantially perpendicular to these sides. In particular, the elements of the first series 7A are disposed such as to alternate with those of the second series 7B. By means of this solution, the effluents can flow through the interior of the flow layer even several times, in opposite senses, in the direction in which said partition elements extend.

According to another aspect, the present invention relates to a plant for abating both organic and inorganic nitrogen in industrial and livestock effluents, comprising said reactor.

In particular, said plant comprises:
- at least one container unit comprising a first inlet for air and oxygen, a second inlet for the organic liquid effluents, and at least one first outlet for said organic liquid effluents,
- pumping means the suction side of which being hydraulically connected to said at least one first outlet of said at least one container unit via a first hydraulic line,
- at least one reactor as above described, wherein said inlet of said third flow layer of said reactor is hydraulically connected to the delivery side of said pumping means via a second hydraulic line.

With reference to Figure 6, the plant 100 comprises at least one container unit 2 provided with a first inlet 2A for air and oxygen, a second inlet for the organic liquid effluents, and at least one first outlet 2C, again for the organic liquid effluents. The plant 100 also comprises pumping means 8 the suction side of which is hydraulically connected to the first outlet 2C of the container unit 2 via a first hydraulic line L1. The plant 100 also comprises at least one reactor 1 according to the present invention, the inlet IN for the organic liquid effluents of which is hydraulically connected to the delivery side of the pumping means 8 via a second hydraulic line L2.

According to a preferred embodiment, the plant 100 further comprises a scrubber 4 and a further hydraulic line L3 which hydraulically connects the container unit 2 to the scrubber 4. The scrubber 4 is used to recondense those compounds comprising nitrogen which are released in gaseous form before reaching the reactor. In this respect, should this aspect not have been considered and calculated, the evaluation of the effective nitrogen removal efficiency at the reactor exit would be altered.

Preferably, the plant comprises a starter vessel 3 hydraulically connected to the first line L1 between the container unit 2 and the pumping means 8 via a first regulator element (V1). The function of the starter vessel 3 is to maintain the pumping means 8 under a head to facilitate starting. It should be noted that if these pumping means 8 comprise a self-priming pump, then the starter vessel 3 need not be present in the plant 100.

The plant 100 also comprises a hydraulic bypass line L4 which hydraulically connects the second hydraulic line L2 to the organic liquid container unit. The plant 100 also comprises a second regulator element V2 positioned between the second hydraulic line L2 and the bypass line L4, and preferably a third flow regulator element V3 which enables organic liquid to be withdrawn from the bypass line L4.

According to another preferred embodiment, the plant comprises at least two reactors of the invention positioned in series, such as to increase the nitrogen removal efficiency at the plant exit.

According to a further preferred embodiment, the plant comprises at least two reactors of the invention positioned in parallel, such as to increase the amount of effluent simultaneously treated in the plant.

Optionally, the plant can comprise a plurality of reactors both in series and in parallel such as to concomitantly improve both the nitrogen removal efficiency at the plant exit and the amount of effluent simultaneously treated in the plant. According to a further aspect, the present invention relates to a method for implementing the plant as above described. Said method for removing both organic and inorganic nitrogen in industrial and livestock effluents comprises the following steps:
a) supplying clarified and/or filtered industrial and/or livestock effluent;
b) passing said clarified and/or filtered effluent through the reactor as above described exposed to sunlight; and
c) collecting the thus treated effluent leaving the reactor.

In step a), the industrial and/or livestock effluent is supplied in clarified and/or filtered form, i.e. deprived of any solid bodies present which could dim exposure to sunlight, and obstruct passage through the reactor.

In this respect, clarification and/or filtration is/are a step of removing all suspended solid particles by sedimentation, flotation, filtration, centrifugation, and similar techniques, for the purpose of achieving:
- maximum transparency of the liquid to be treated and hence greater efficiency of the photocatalytic system,
- improved fluidity and pumpability particularly in the thin layers, so reducing the formation of incrustations and deposits,
- reduced organic particulate which could compete with the nitrogenated compounds during oxidation.

A preliminary mechanical reduction of COD can be also implemented.

In step b) the thus clarified and/or filtered effluent is passed through the reactor of the invention, the high transmittance surface of which is exposed to sunlight, to trigger photocatalysis.

In step c), the effluent treated in this manner, i.e. wherein the inorganic and organic nitrogen has been significantly removed, is collected on leaving the reactor.

It should be noted that all those aspects identified as preferred and advantageous for the reactor and plant are also to be considered likewise preferred and advantageous for the method of implementing the present invention.

Examples of implementation of the present invention are given below by way of non-limiting illustration.

### EXAMPLES

### Example 1. Treatment of standard ammonium chloride solutions in accordance with the present invention

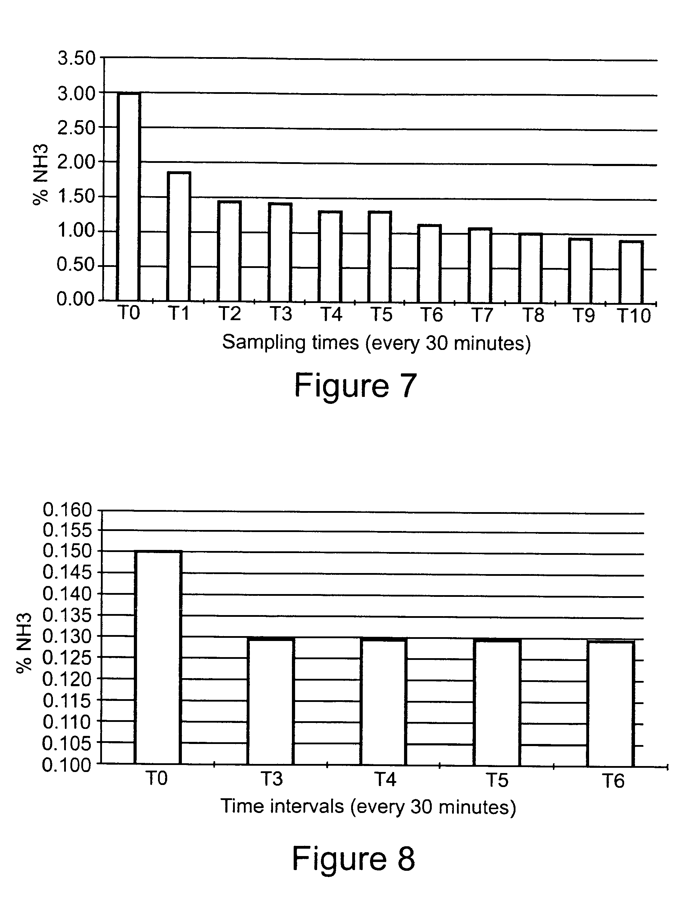

30 litres of standard ammonium chloride solution were filtered. This solution had a total ammoniacal nitrogen content of 3%. The filtered solution was then introduced partly into the starter vessel and partly into the container unit. The pump was switched on and the solution was made to circulate in the reactor. The first sample was taken at time 0 and a further 10 samples at a distance of 30 minutes one from the other, by means of the bypass line. As shown in figure 7, after half an hour, the effluent at the plant outlet had a total ammoniacal nitrogen content of 1.89%, which continued to decline to 0.94% at the fifth hour.

Hence the nitrogen removal was surprisingly observed to be 37% on the initial amount even after the first half hour; the result was extremely satisfactory especially considering that it was observed after only a short time and that subsequently it fell by 70% overall. It should be noted that this experiment was conducted in high summer and in the presence of optimal light and temperature conditions.

### Example 2. Treatment of liquid sewage originating from pig farms in accordance with the present invention

30 litres of effluent deriving from an intensive pig farm were filtered. This effluent had a total ammoniacal nitrogen content of 0.15%. The filtered effluent was then introduced partly into the starter vessel and partly into the container unit. The pump was activated and the effluent was made to circulate in the reactor. A first sample was taken at time 0 and a further four samples at a distance of 30 minutes one from the other, from the bypass line. As shown in figure 8, at the outlet of the plant, the effluent had an ammoniacal nitrogen content of 0.13% after half an hour, remaining constant for the next two hours.

Hence nitrogen removal was observed to be advantageously 13% on the initial amount. This was a more than satisfactory result, considering that the reduction was achieved just after the first half hour and that this experiment was carried out in winter on a day wherein the light and temperature conditions were far from optimal.

The advantages achieved by the described solution and obtained according to the present invention are evident from the above given detailed description and Examples. In particular, the reactor of the present invention proved to be surprisingly and advantageously effective in removing nitrogen simultaneously and contemporaneously in both organic and inorganic compounds, hence significantly reducing the relative emission into the environment. Moreover, the fact that the reactor operates by direct exposure to sunlight, the catalyst being activated by visible UV radiation naturally emitted by the sun, even under atmospheric conditions not favourable for optimal irradiation, provides a considerable advantage in economic and environmental terms, because artificial sources involving considerable energy consumption are not used. Moreover, by photocatalytic oxidation the treated compounds release elemental nitrogen (N₂) which is known to be the main component of the atmosphere.

In addition, both the reactor and the plant comprising it are of extremely simple and economical construction.

## Claims

1. A reactor (1) for the photocatalytic oxidation of both organic and inorganic nitrogen in industrial and livestock effluents, said reactor comprising a structure comprising:
- at least one first support layer (10);
- at least one second catalyst layer (20) based on titanium, vanadium, zirconium, tin or a mixture thereof on said first support layer;
- at least one third flow layer (30) for the flow of said effluents, said reactor being provided with an inlet (IN) and an outlet (OUT) for said effluents from said third flow layer;
- at least one fourth layer (40) of vitreous or polymeric material having at least 90% transmittance to radiation in the UV-visible spectrum,
wherein said at least one third flow layer (30) extends between said at least one second catalyst layer (20) and said at least one fourth layer (40) of vitreous or polymeric material.

2. The reactor (1) according to claim 1, wherein said catalyst is titanium dioxide, vanadium pentoxide, zirconium dioxide, tin dioxide or a mixture thereof, optionally doped with Cr, Mn, Fe, Co, Ni, Cu, Mo, Ru, Rh, Pd, Ag, W, Re, Os, lr, Pt, Au or a mixture thereof.

3. The reactor (1) according to claim 2, wherein said titanium dioxide is an anatase:rutile mixture in a ratio from 5:1 to 2:1.

4. The reactor (1) according to any one of claims 1-3, wherein said vitreous or polymeric material is quartz glass, polyethylene, or polypropylene.

5. The reactor (1) according to any one of claims 1-4, wherein said quartz glass comprises SiO₂, Na₂O, K₂O, CaO, Fe₂O₃ and Sb₂O₃.

6. The reactor (1) according to any one of claims 1-5, wherein said second catalyst layer (20) is prepared by applying to the first support layer (10) an acid solution comprising titanium dioxide, vanadium pentoxide or a mixture thereof, having a particle size between 1 and 200 nm, a silicone alkoxide, C₁-C₄ alcohol and water, allowing the solvent to evaporate, and thermally treating at at least 100°C.

7. The reactor (1) according to any one of claims 1-6, wherein said third flow layer (30) for liquids has a thickness of 1-20 mm.

8. The reactor (1) according to claim 7, wherein said third flow layer for liquids (30) has a thickness of 2-10 mm.

9. The reactor (1) according to claim 8, wherein said third flow layer for liquids (30) has a thickness of 3-6 mm.

10. The reactor (1) according to any one of claims 1-9, wherein in said third layer partition elements (7A, 7B) are provided, defining a predetermined flow path for said organic liquid.

11. Plant (100) for abating both organic and inorganic nitrogen comprising:
- at least one container unit (2) comprising a first inlet (2A) for air and oxygen, a second inlet for said organic liquid, and at least one first outlet (2C) for said organic liquid;
- pumping means (8) the suction side of which is hydraulically connected to said at least one first outlet (2C) of said at least one container unit (2) via a first hydraulic line (L1);
- at least one reactor (1) according to any one of claims 1-10, wherein said inlet of said third flow layer of said reactor (1) is hydraulically connected to the delivery side of said pumping means (8) via a second hydraulic line (L2).

12. The plant (100) according to claim 11, further comprising a scrubber (4) and a further hydraulic line (L3) which connects said container unit (2) to said scrubber (4).

13. The plant (100) according to claim 11 or 12, further comprising a starter vessel (3), hydraulically connected to said first hydraulic line (L1) between said container unit (2) and said pumping means (8).

14. The plant (100) according to any one of claims 11-13, further comprising a bypass hydraulic line (L4) which hydraulically connects said second hydraulic line (L2) to said container unit (2), said plant comprising a hydraulic regulating valve (V2) between said hydraulic bypass line and said second hydraulic line (L2).

15. Method for abating both organic and inorganic nitrogen in industrial and livestock effluent comprising the following steps:
a) supplying clarified and/or filtered industrial and/or livestock effluent;
b) passing said clarified and/or filtered effluent through at least one reactor of claim 1 exposed to sunlight; and
c) collecting the thus treated effluent leaving the reactor.
